# EUROPÄISCHE PATENTSCHRIFT

(11) **EP 4 268 563 B1**
(45) Veröffentlichungstag und Bekanntmachung des Hinweises auf die Patenterteilung: **15.04.2026**
(21) Anmeldenummer: 23155768.7
(22) Anmeldetag: 09.02.2023
(51) Int. Cl.: A01B 76/00, A01D 34/00, A01D 41/14

(54) **VERFAHREN ZUM BESTIMMEN EINES VERSCHLEISSZUSTANDS EINER AUTONOMEN LANDWIRTSCHAFTLICHEN ARBEITSMASCHINE**
METHOD FOR DETERMINING A WEAR STATE OF AN AUTONOMOUS AGRICULTURAL MACHINE
PROCÉDÉ DE DÉTERMINATION D'UN ÉTAT D'USURE D'UNE MACHINE DE TRAVAIL AGRICOLE AUTONOME

(30) Priorität: 27.04.2022 DE 102022110117
(43) Veröffentlichungstag der Anmeldung: 01.11.2023
(73) Patentinhaber: CLAAS Selbstfahrende Erntemaschinen GmbH, 33428 Harsewinkel (DE)
(72) Erfinder: Ehlert, Christian, 33719 Bielefeld (DE); Mähler, Reinhold, 33378 Rheda-Wiedenbrück (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Dr., Eberhard, 33332 Gütersloh (DE); Apke, Christoph, 33659 Bielefeld (DE); Korthals, Timo, 33818 Leopoldshöhe (DE); Thiesmann, Waldemar, 49080 Osnabrück (DE); Schröder, Axel, 33332 Gütersloh (DE); Monkenbusch, Robin, 33378 Rheda-Wiedenbrück (DE)
(74) Vertreter: CLAAS Gruppe

(56) Entgegenhaltungen:
- EP-A1- 3 482 975
- EP-A1- 3 636 063
- EP-A1- 3 738 427
- EP-A1- 3 970 467
- US-A1- 2014 105 481

## Beschreibung

Die vorliegende Anmeldung betrifft ein Verfahren zum Bestimmen eines Verschleißzustands mindestens eines Arbeitsaggregats einer autonomen landwirtschaftlichen Arbeitsmaschine und/oder mindestens eines an die autonome landwirtschaftliche Arbeitsmaschine adaptierten Arbeitsaggregats gemäß dem Oberbegriff des unabhängigen Patentanspruchs 1.

In der modernen Landwirtschaft sind vermehrt Bestrebungen dahingehend zu erkennen Arbeitseinsätze autonom durchzuführen, um die Produktivität und Wirtschaftlichkeit der Prozesse zu erhöhen. Hierfür kommen sogenannte autonome landwirtschaftliche Arbeitsmaschinen zum Einsatz, die sich dadurch auszeichnen, dass kein Bediener in einer Kabine zur Steuerung derselben vorhanden ist. Demnach steht bei autonomen landwirtschaftlichen Arbeitsmaschinen kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf einer landwirtschaftlichen Fläche ausführen kann. Derartige autonome landwirtschaftliche Arbeitsmaschinen werden daher auch als unbemannte landwirtschaftliche Arbeitsmaschinen bezeichnet.

Wesentlich sowohl für den Betrieb einer bemannten landwirtschaftlichen Arbeitsmaschine als auch für den Betrieb einer autonomen, also unbemannten, landwirtschaftlichen Arbeitsmaschine ist es, Zustände von Arbeitsaggregaten der Arbeitsmaschinen, wie Antriebsmotoren, Getriebe, Drusch-, Abscheide-, Reinigungs-, Häckselaggregate oder dergleichen, und/oder von an diese Arbeitsmaschinen adaptierten Arbeitsaggregaten, wie Anbaugeräte, beispielsweise ein Grubber, ein Pflug, eine Egge, ein Mähwerk oder dergleichen, Vorsatzgeräte, beispielsweise ein Schneidwerk, oder dergleichen, zu bestimmen, um zu verhindern, dass die Arbeitsmaschinen während ihres Betriebs in kritische Betriebssituation gelangen, im schlimmsten Fall vollständig ausfallen aufgrund eines Defekts eines Arbeitsaggregats.

Bei bemannten landwirtschaftlichen Arbeitsmaschinen befindet sich ein Bediener in der Kabine der Arbeitsmaschine, der einen betriebskritischen Zustand eines Arbeitsaggregats optisch, haptisch und/oder akustisch diagnostizieren und die Arbeitsmaschine entsprechend zur Vermeidung der kritischen Betriebssituation ansteuern kann. Auch ist es bei bemannten wirtschaftlichen Arbeitsmaschinen möglich, dass "On-Board" ein Verschleißzustand eines Arbeitsaggregats, der zu einer betriebskritischen Situation führen könnte, mittels einer Verarbeitungseinrichtung diagnostiziert und dem Bediener angezeigt wird, so dass dieser die Arbeitsmaschine entsprechend zur Vermeidung der betriebskritischen Situation ansteuern kann.

Aus der EP 3 913 251 A1 ist beispielsweise ein Verfahren zum Diagnostizieren des Verschleißzustands einer hydraulisch betätigbaren Kupplung eines Fahrzeugantriebstrangs einer bemannten landwirtschaftlichen Arbeitsmaschine bekannt. Mittels einer in der Arbeitsmaschine vorhandenen Verarbeitungseinrichtung wird eine Druckableitung im Kolbenbetätigungskreislauf, der auf die hydraulische Kupplung wirkt, überwacht, indem das Zeitintervall zwischen einem ersten Zeitpunkt, der der Aktivierung des hydraulischen Kupplungsbefehls entspricht, und einem zweiten Zeitpunkt, in dem die Druckableitung eine zweite divergierende Tendenz annimmt, gemessen wird.

Anders als bei bemannten landwirtschaftlichen Arbeitsmaschinen befindet sich, wie bereits erwähnt, bei autonomen landwirtschaftlichen Arbeitsmaschinen kein Bediener in der Nähe der landwirtschaftlichen Arbeitsmaschine, geschweige denn in einer Kabine der landwirtschaftlichen Arbeitsmaschine, der in Abhängigkeit eines diagnostizierten oder ihm angezeigten zu einer betriebskritischen Situation führenden Verschleißzustands eines Arbeitsaggregats und/oder aufgrund eines optisch, haptisch und/oder akustisch diagnostizierten Problems eine Ansteuerung der landwirtschaftlichen Arbeitsmaschine zur Vermeidung einer solchen betriebskritischen Situation vornehmen kann.

Die Druckschrift EP 3 970 467 A1 beschreibt eine landwirtschaftliche Arbeitsmaschine, ein Steuerungssystem für eine landwirtschaftliche Arbeitsmaschine und ein Verfahren für eine landwirtschaftliche Arbeitsmaschine welche über einen Schallsensor verfügen, der die von der Arbeitsmaschine während des Betriebs erzeugten Schallsignale überträgt. Die übertragenen Schallsignale werden von einer Steuerung empfangen und zur Feststellung des ordnungsgemäßen Betriebs der Arbeitsmaschine verwendet. Die Steuerung vergleicht ein auf den übertragenen Schallsignalen basierendes Betriebsfrequenzprofil mit einem Basisfrequenzprofil, um festzustellen, ob die Wahrscheinlichkeit einer Fehlfunktion oder eines Schadens an einem Teil oder System der Arbeitsmaschine besteht. Ist dies der Fall, sendet die Steuerung ein Signal zum Abschalten der landwirtschaftlichen Arbeitsmaschine oder eine Warnmeldung an ein Display, die darauf hinweist, dass ein fehlerhaftes oder beschädigtes Teil oder System erkannt wurde.

Ausgehend von dem vorstehend genannten Stand der Technik ist es demnach die Aufgabe der vorliegenden Erfindung, ein Verfahren anzugeben, mittels dem Verschleißzustände von Arbeitsaggregaten einer autonomen landwirtschaftlichen Arbeitsmaschine und/oder von an die autonome landwirtschaftliche Arbeitsmaschine adaptierten Arbeitsaggregaten zuverlässig bestimmt und basierend hierauf eine Ansteuerung der autonomen landwirtschaftlichen Arbeitsmaschine vorgenommen werden kann, so dass kritische Betriebssituationen aufgrund von verschlissenen Arbeitsaggregaten während der Durchführung eines Arbeitsschrittes durch die autonome landwirtschaftliche Arbeitsmaschine verhindert werden können.

Diese Aufgabe wird erfindungsgemäß durch die Merkmale des unabhängigen Patentanspruchs 1 gelöst, wobei vorteilhafte Weiterbildungen des erfindungsgemäßen Verfahrens Gegenstand der entsprechenden abhängigen Patentansprüche 2 bis 15 sind.

Demnach betrifft die vorliegende Erfindung ein Verfahren zum Bestimmen eines Verschleißzustands mindestens eines Arbeitsaggregats einer autonomen landwirtschaftlichen Arbeitsmaschine und/oder mindestens eines an die autonome landwirtschaftliche Arbeitsmaschine adaptierten Arbeitsaggregats. Mittels einer Sensoreinrichtung werden Daten zu einer Vielzahl an Zeitpunkten vor, während und/oder nach einer Durchführung eines Arbeitsschrittes durch die autonome landwirtschaftliche Arbeitsmaschine ermittelt, wobei die Daten Betriebsparameter der autonomen landwirtschaftlichen Arbeitsmaschine und/oder Betriebsparameter des an die autonome landwirtschaftliche Arbeitsmaschine adaptierten Arbeitsaggregats repräsentieren. Das Verfahren ist dadurch gekennzeichnet, dass die ermittelten Daten an eine Datenbank übermittelt werden und zwar zu jedem Zeitpunkt der Vielzahl an Zeitpunkten. Die Datenbank kommuniziert mit der Sensoreinrichtung zur Übertragung von Daten und die ermittelten Daten werden in der Datenbank hinterlegt. Mittels einer Verarbeitungseinrichtung wird der Verschleißzustand des Arbeitsaggregats der autonomen landwirtschaftlichen Arbeitsmaschine und/oder des an die autonome landwirtschaftliche Arbeitsmaschine adaptierten Arbeitsaggregats zu jedem Zeitpunkt der Vielzahl an Zeitpunkten durch ein Verarbeiten der ermittelten Daten in einer Analyseroutine bestimmt. Die Verarbeitungseinrichtung kommuniziert mit der Datenbank zur Übertragung von Daten. Mittels der Verarbeitungseinrichtung wird eine Anweisung zur Durchführung des Arbeitsschrittes durch die autonome landwirtschaftliche Arbeitsmaschine erzeugt und zwar in Abhängigkeit des bestimmten Verschleißzustands des Arbeitsaggregats der autonomen landwirtschaftlichen Arbeitsmaschine und/oder des an die autonome landwirtschaftliche Arbeitsmaschine adaptierten Arbeitsaggregats. Die erzeugte Anweisung wird an eine Steuereinrichtung der autonomen landwirtschaftlichen Arbeitsmaschine übermittelt und von dieser ausgeführt.

Durch das erfindungsgemäße Verfahren wird es möglich den Verschleißzustand eines Arbeitsaggregats der autonomen landwirtschaftlichen Arbeitsmaschine und/oder eines an die autonome landwirtschaftliche Arbeitsmaschine adaptierten Arbeitsaggregats zu der Vielzahl an Zeitpunkten zu bestimmen und somit den Zustand der Arbeitsaggregate im Wesentlich kontinuierlich zu überwachen, damit mögliche betriebskritische Situationen, die bei der Durchführung eines Arbeitsschrittes durch die autonome landwirtschaftliche Arbeitsmaschine verschleißbedingt auftreten und zu einer verringerten Effizienz bei der Durchführung des Arbeitsschrittes oder im schlimmsten Fall zu einem Defekt der autonomen landwirtschaftlichen Arbeitsmaschine bzw. des Arbeitsaggregats führen könnten, zuverlässig vermieden werden können.

Alle Verfahrensschritte einschließlich des Ausführens der Anweisung zur Durchführung des Arbeitsschrittes laufen automatisch und ohne ein Eingreifen einer Person ab. Mit anderen Worten, es wird keine Person benötigt, die sich während des Betriebs der autonomen landwirtschaftlichen Arbeitsmaschine in unmittelbarer Nähe zu dieser befindet, geschweige denn sich auf der autonomen landwirtschaftlichen Arbeitsmaschine aufhält.

Ganz im Gegenteil, mittels der Sensoreinrichtung werden zu der Vielzahl an Zeitpunkten selbsttätig vor, während und/oder nach der Durchführung des Arbeitsschrittes Daten ermittelt, die Betriebsparameter der autonomen landwirtschaftlichen Maschine, insbesondere eines oder mehrerer Arbeitsaggregate der autonomen landwirtschaftlichen Arbeitsmaschine, und/oder Betriebsparameter des an die autonome landwirtschaftliche Arbeitsmaschine adaptierten Arbeitsaggregaten repräsentieren. Basierend auf diesen Daten, die an die Datenbank übermittelt werden, wird zu jedem Zeitpunkt der Vielzahl an Zeitpunkten an dem die Daten ermittelt wurden, mittels der Verarbeitungseinrichtung, die gemeinsam mit der Datenbank ein Verwaltungssystem ausbilden kann, der Verschleißzustand des Arbeitsaggregats der autonomen und wirtschaftlichen Arbeitsmaschine und/oder des an die autonome landwirtschaftliche Arbeitsmaschine adaptierten Arbeitsaggregats, zu dem die Daten vorliegen, bestimmt. Die ermittelten Daten werden hierzu mittels der Verarbeitungseinrichtung in einer Analyseroutine derart verarbeitet, dass eine Anweisung zur Durchführung des Arbeitsschrittes durch die autonome landwirtschaftliche Arbeitsmaschine erzeugt wird. Diese Anweisung zur Durchführung des Arbeitsschrittes durch die autonome landwirtschaftliche Arbeitsmaschine ist dadurch gekennzeichnet, dass sie in Abhängigkeit des zuvor bestimmten Verschleißzustands des Arbeitsaggregats der autonomen landwirtschaftlichen Arbeitsmaschine und/oder des an die autonome landwirtschaftliche Arbeitsmaschine adaptierten Arbeitsaggregats zu dem die ermittelten Daten vorlagen erzeugt wird. Somit ist die Anweisung spezifisch auf den zuvor bestimmten Verschleißzustand des Arbeitsaggregats zugeschnitten. Das Übermitteln der erzeugten Anweisung an eine Steuereinrichtung der autonomen landwirtschaftlichen Arbeitsmaschine und das Ausführen der Anweisung durch die Steuereinrichtung sorgt dann dafür, dass die autonome landwirtschaftliche Arbeitsmaschine einen Zustand einnimmt bzw. in einen Zustand überführt wird, der dem zuvor bestimmten Verschleißzustand des Arbeitsaggregats bzw. den zuvor bestimmten Verschleißzuständen der Arbeitsaggregate Rechnung trägt.

In der Analyseroutine, die der Bestimmung des Verschleißzustands des Arbeitsaggregats dient, wird ein Analysealgorithmus angewendet, der aus den ermittelten Daten den exakt zu dem Zeitpunkt, an dem die Daten ermittelt wurden, vorliegenden Verschleißzustand des Arbeitsaggregats bestimmt. Neben klassischen Analysealgorithmen, beispielsweise einer Fast-Fourier-Transformation, kann der in der Analyseroutine angewendete Analysealgorithmus auch ein lernfähiger Analysealgorithmus, also ein Analysealgorithmus, der auf einer künstlichen Intelligenz, vorzugsweise einem künstlichen neuronalen Netz, basiert. Der lernfähige Analysealgorithmus wird vor der Durchführung einer ersten Bestimmung eines Verschleißzustands mittels eines Initialdatensatzes, der mittels manueller Annotation vorgenommene Zuordnungen von Daten betreffend verschiedene Betriebsparameter von Arbeitsaggregaten von autonomen landwirtschaftlichen Arbeitsmaschinen und/oder von an autonome landwirtschaftliche Arbeitsmaschinen adaptierten Arbeitsaggregaten und entsprechenden Verschleißzuständen der Arbeitsaggregate definiert, trainiert. Die während der Durchführung des erfindungsgemäßen Verfahrens ermittelten Daten und bestimmten Verschleißzustände können zum weiteren Trainieren des Analysealgorithmus verwendet werden.

Das erfindungsgemäße Verfahren erlaubt demnach eine äußerst präzise und zuverlässige Bestimmung von Verschleißzuständen der Arbeitsaggregate der autonomen landwirtschaftlichen Arbeitsmaschine und/oder an diese adaptierter Arbeitsaggregate und eine hiervon abhängige Ansteuerung der autonomen landwirtschaftlichen Arbeitsmaschine zur oder während der Durchführung des Arbeitsschrittes, wodurch betriebskritische Situationen, die im schlimmsten Fall zu einem Defekt eines Arbeitsaggregats und somit zu einem Ausfall der autonomen landwirtschaftlichen Arbeitsmaschine führen könnten, verhindert werden.

Gemäß einer vorteilhaften Weiterbildung der Erfindung ist vorgesehen, dass die Anweisung zur Durchführung des Arbeitsschrittes eine Vorschrift umfasst, die eine Ansteuerung der autonomen landwirtschaftlichen Arbeitsmaschine zur planmäßigen Durchführung des Arbeitsschrittes definiert.

Alternativ hierzu ist vorgesehen, dass die Anweisung zur Durchführung des Arbeitsschrittes eine Vorschrift umfasst, die eine Ansteuerung der autonomen landwirtschaftlichen Arbeitsmaschine zum Stoppen der planmäßigen Durchführung des Arbeitsschrittes definiert.

Ergänzend zu dieser Alternative ist als vorteilhafte Weiterbildung der Erfindung vorgesehen, dass die Anweisung zur Durchführung des Arbeitsschrittes eine Vorschrift, die das Beauftragen einer für eine Wartung der autonomen landwirtschaftlichen Arbeitsmaschine zuständigen Person zur Wartung des Arbeitsaggregats der autonomen landwirtschaftlichen Arbeitsmaschine und/oder des an die autonome landwirtschaftliche Arbeitsmaschine adaptierten Arbeitsaggregats definiert, oder eine Vorschrift, die eine geänderte Route für die autonome landwirtschaftliche Arbeitsmaschine zur Anfahrt eines Ortes definiert, an dem die für die Wartung der autonomen landwirtschaftlich Arbeitsmaschine zuständige Person die Wartung des Arbeitsaggregats der autonomen landwirtschaftlichen Arbeitsmaschine und/oder des an die autonome landwirtschaftliche Arbeitsmaschine adaptierten Arbeitsaggregats durchführt, umfasst.

In Abhängigkeit des zuvor bestimmten Verschleißzustands des/der Arbeitsaggregate wird eine Anweisung von der Verarbeitungseinrichtung erzeugt, die entsprechende Vorschriften zu Ansteuerung der autonomen landwirtschaftlichen Arbeitsmaschine umfasst, die dem entsprechenden zuvor bestimmten Verschleißzustand Rechnung tragen. Wird durch die Verarbeitungseinrichtung ein unkritischer Verschleißzustand, also ein Verschleißzustand, der nicht zu einer betriebskritischen Situation führen würde, bestimmt, ist in der Anweisung die Vorschrift enthalten, die eine Ansteuerung der autonomen landwirtschaftlichen Arbeitsmaschine zur planmäßigen Durchführung des Arbeitsschrittes definiert. Wird hingegen durch die Verarbeitungseinrichtung ein kritischer Verschleißzustand, also ein Verschleißzustand, der zu einer betriebskritischen Situation führen würde, bestimmt, ist in der Anweisung die Vorschrift enthalten, die eine Ansteuerung der autonomen landwirtschaftlichen Arbeitsmaschine zum Stoppen der planmäßigen Durchführung des Arbeitsschrittes definiert.

Wird beispielsweise der Verschleißzustand des Arbeitsaggregats unmittelbar vor einem Beginn der Durchführung des Arbeitsschrittes ermittelt und wird ein unkritischer Verschleißzustand durch die Verarbeitungseinrichtung bestimmt, so wird die Anweisung mit der Vorschrift, die eine Ansteuerung der autonomen landwirtschaftlichen Arbeitsmaschine zur planmäßigen Durchführung des Arbeitsschrittes definiert, erzeugt, dessen Ausführung durch die Steuereinrichtung dazu führt, dass die autonome landwirtschaftliche Arbeitsmaschine von der Steuereinrichtung derart angesteuert wird, dass sie mit der Durchführung des Arbeitsschrittes wie geplant beginnt.

Wird der Verschleißzustand des Arbeitsaggregats unmittelbar vor einem Beginn der Durchführung des Arbeitsschrittes ermittelt und wird hingegen ein kritischer Verschleißzustand durch die Verarbeitungseinrichtung bestimmt, so wird die Anweisung mit der Vorschrift, die eine Ansteuerung der autonomen landwirtschaftlichen Arbeitsmaschine zum Stoppen der planmäßigen Durchführung des Arbeitsschrittes definiert, erzeugt, dessen Ausführung durch Steuereinheit dazu führt, dass die autonome landwirtschaftliche Arbeitsmaschine von der Steuereinrichtung derart angesteuert wird, dass sie nicht mit der Durchführung des Arbeitsschrittes wie geplant beginnt.

Wird der Verschleißzustand des Arbeitsaggregats während der Durchführung des Arbeitsschrittes ermittelt und wird ein unkritischer Verschleißzustand durch die Verarbeitungseinrichtung bestimmt, so wird die Anweisung mit der Vorschrift, die eine Ansteuerung der autonomen landwirtschaftlichen Arbeitsmaschine zur planmäßigen Durchführung des Arbeitsschrittes definiert, erzeugt, dessen Ausführung durch die Steuereinrichtung dazu führt, dass die autonome landwirtschaftliche Arbeitsmaschine von der Steuereinrichtung derart angesteuert wird, dass sie mit die Durchführung des Arbeitsschrittes planmäßig weiter ausführt.

Wird der Verschleißzustand des Arbeitsaggregats während der Durchführung des Arbeitsschrittes ermittelt und wird hingegen ein kritischer Verschleißzustand durch die Verarbeitungseinrichtung bestimmt, so wird die Anweisung mit der Vorschrift, die eine Ansteuerung der autonomen landwirtschaftlichen Arbeitsmaschine zum Stoppen der planmäßigen Durchführung des Arbeitsschrittes definiert, erzeugt, dessen Ausführung durch die Steuereinrichtung dazu führt, dass die autonome landwirtschaftliche Arbeitsmaschine von der Steuereinrichtung derart angesteuert wird, dass sie die Durchführung des Arbeitsschrittes stoppt bzw. unterbricht.

Wird der Verschleißzustand des Arbeitsaggregats nach der Durchführung des Arbeitsschrittes ermittelt und wird ein unkritischer Verschleißzustand durch die Verarbeitungseinrichtung bestimmt, so wird die Anweisung mit der Vorschrift, die eine Ansteuerung der autonomen landwirtschaftlichen Arbeitsmaschine zur planmäßigen Durchführung des Arbeitsschrittes definiert, erzeugt, dessen Ausführung durch die Steuereinrichtung dazu führt, dass die autonome landwirtschaftliche Arbeitsmaschine von der Steuereinrichtung derart angesteuert wird, dass die Durchführung eines auf den durchgeführten Arbeitsschritt folgenden Arbeitsschrittes planmäßig erfolgt.

Wird der Verschleißzustand des Arbeitsaggregats nach der Durchführung des Arbeitsschrittes ermittelt und wird hingegen ein kritischer Verschleißzustand durch die Verarbeitungseinrichtung bestimmt, so wird die Anweisung mit der Vorschrift, die eine Ansteuerung der autonomen landwirtschaftlichen Arbeitsmaschine zum Stoppen der planmäßigen Durchführung des Arbeitsschrittes definiert, erzeugt, dessen Ausführung durch die Steuereinrichtung dazu führt, dass die autonome landwirtschaftliche Arbeitsmaschine von der Steuereinrichtung derart angesteuert wird, dass sie mit der Durchführung eines auf den durchgeführten Arbeitsschritt folgenden Arbeitsschrittes nicht beginnt.

Wird ein kritischer Verschleißzustand des Arbeitsaggregats vor, während und/oder nach der Durchführung eines Arbeitsschrittes von der Verarbeitungseinrichtung bestimmt, der eine Wartung des Arbeitsaggregats erfordert, so kann die Anweisung eine weitere Vorschrift enthalten, so dass das Arbeitsaggregat entweder vor Ort durch eine für die Wartung der autonomen landwirtschaftlichen Arbeitsmaschine zuständige Person gewartet wird oder aber sich die autonome landwirtschaftliche Arbeitsmaschine selbsttätig, also autonom, zu einem Ort bewegt, an dem die Wartung dann durch die zuständige Person durchgeführt werden kann.

Dies erlaubt es bei einem zuvor bestimmten kritischen Verschleißzustand nicht nur die Durchführung des Arbeitsschrittes durch die autonome landwirtschaftliche Maschine nicht zu beginnen oder zu stoppen, sondern auch direkt eine Wartung des betroffenen Arbeitsaggregats durchführen zu lassen, so dass eine Ausfallzeit der autonomen landwirtschaftlichen Arbeitsmaschine auf ein Minimum reduziert wird.

Gemäß einer vorteilhaften Weiterbildung der Erfindung ist vorgesehen, dass, mittels der Verarbeitungseinrichtung, ein zu einem Zeitpunkt unmittelbar vor der Durchführung des Arbeitsschrittes bestimmter Verschleißzustand des Arbeitsaggregats der autonomen landwirtschaftlichen Arbeitsmaschine und/oder des an die autonome landwirtschaftliche Arbeitsmaschine adaptierten Arbeitsaggregats mit einem zu einem Zeitpunkt unmittelbar nach der Durchführung des Arbeitsschrittes bestimmten Verschleißzustand des Arbeitsaggregats der autonomen landwirtschaftlichen Arbeitsmaschine und/oder des an die autonome landwirtschaftliche Arbeitsmaschine adaptierten Arbeitsaggregats verglichen wird und basierend hierauf eine Verschleißkennzahl für das Arbeitsaggregat der autonomen landwirtschaftlichen Arbeitsmaschine und oder das an die autonome landwirtschaftliche Arbeitsmaschine adaptierte Arbeitsaggregat ermittelt wird, die den Verschleiß des Arbeitsaggregats der autonomen landwirtschaftlichen Arbeitsmaschine und/oder des an die autonome landwirtschaftliche Arbeitsmaschine adaptierten Arbeitsaggregats, der bei der Durchführung des Arbeitsschrittes durch die autonome landwirtschaftliche Arbeitsmaschine entsteht, repräsentiert, wobei die ermittelte Verschleißkennzahl in der Datenbank hinterlegt wird.

Vorzugsweise wird die ermittelte Verschleißkennzahl für das Arbeitsaggregat der autonomen landwirtschaftlichen Arbeitsmaschine und/oder das an die autonome landwirtschaftliche Arbeitsmaschine adaptierte Arbeitsaggregat zur Bestimmung von Betriebskosten, die bei der Durchführung des Arbeitsschrittes durch die autonome landwirtschaftliche Arbeitsmaschine entstehen, verarbeitet.

Ergänzend oder alternativ hierzu wird die ermittelte Verschleißkennzahl für das Arbeitsaggregat der autonomen landwirtschaftlichen Arbeitsmaschine und/oder das an die autonome landwirtschaftliche Arbeitsmaschine adaptierte Arbeitsaggregat an eine bzw. die für eine bzw. die Wartung der autonomen landwirtschaftlichen Arbeitsmaschine zuständige Person zur Planung von Wartungsintervallen des Arbeitsaggregats der autonomen landwirtschaftlichen Arbeitsmaschine und/oder des an die autonome landwirtschaftliche Arbeitsmaschine adaptierten Arbeitsaggregats übermittelt.

Die Bestimmung einer Verschleißkennzahl, die den während eines durchgeführten Arbeitsschrittes entstandenen Verschleiß an einem Arbeitsaggregat repräsentiert bzw. definiert, hat eine Vielzahl an Vorteilen. Zum einen wird für eine Person, beispielsweise einen Landwirt oder einen Lohnunternehmer, dem die autonome landwirtschaftliche Arbeitsmaschine, ein hieran adaptiertes Arbeitsaggregat und/oder eine landwirtschaftliche Fläche oder Hofstätte, auf der der Arbeitsschritt durch die autonome landwirtschaftliche Arbeitsmaschine durchgeführt werden soll, wird oder wurde, unmittelbar ersichtlich zu welchem Verschleiß die Durchführung des spezifischen Arbeitsschrittes an den Arbeitsaggregaten führt, was einen Einfluss auf die Planung zukünftiger Arbeitsschritte haben kann. Weiterhin ist es für die Person unmittelbar ersichtlich, welche Betriebskosten aufgrund von Verschleiß an den Arbeitsaggregaten bei der Durchführung des Arbeitsschrittes entstanden sind, die dann bei der Kostenermittlung herangezogen werden können. Das Bestimmen einer Verschleißkennzahl ist weiterhin für die mit der Wartung der autonomen landwirtschaftlichen Arbeitsmaschine bzw. des hieran adaptierten Arbeitsaggregats betraute Person von Vorteil, die anhand der ermittelten Verschleißkennzahlen Wartungsintervalle planen kann, so dass die Arbeitsaggregate, wenn ein Arbeitsschritt durchgeführt werden soll, stets in einem hinreichend gewarteten Zustand vorliegen. Hierdurch werden Ausfallzeiten der Arbeitsmaschine weiter reduziert, da die Wartung von Arbeitsaggregaten zu Zeiten stattfinden kann, an denen die autonome landwirtschaftliche Arbeitsmaschine bzw. hieran adaptierte Arbeitsaggregate nicht in Betrieb sind.

Gemäß einer vorteilhaften Weiterbildung der Erfindung ist vorgesehen, dass die Sensoreinrichtung eine Vielzahl an Sensoren umfasst, die an der autonomen landwirtschaftlichen Arbeitsmaschine und/oder an dem an die autonome landwirtschaftliche Arbeitsmaschine adaptierten Arbeitsaggregat angeordnet sind.

Als Sensoren kommen alle im Kontext der Landwirtschaft bekannten berührungslos und berührend arbeitenden Sensoren, die der Ermittlung von Betriebsparametern dienen, in Frage.

Durch die Nutzung einer Vielzahl an Sensoren, die an der autonomen landwirtschaftlichen Arbeitsmaschine und/oder an dem an die autonome landwirtschaftliche Arbeitsmaschine adaptierten Arbeitsaggregat angeordnet sind, kann eine große Menge an Daten ermittelt werden, die Betriebsparameter der autonomen landwirtschaftlichen Arbeitsmaschine, insbesondere eines Arbeitsaggregats der autonomen landwirtschaftlichen Arbeitsmaschine, und/oder eines an die autonome landwirtschaftliche Arbeitsmaschine adaptierten Arbeitsaggregats repräsentieren, wodurch eine besonders genaue und zuverlässige Bestimmung des Verschleißzustands möglich wird.

Gemäß einer vorteilhaften Weiterbildung der Erfindung ist vorgesehen, dass die Bestimmung des Verschleißzustands des Arbeitsaggregats der autonomen landwirtschaftlichen Arbeitsmaschine und/oder des an die autonome landwirtschaftliche Arbeitsmaschine adaptierten Arbeitsaggregats mittels der Verarbeitungseinrichtung unter Berücksichtigung von Referenzdaten erfolgt.

Vorzugsweise umfassen die Referenzdaten in einer Speichereinheit der Steuereinrichtung der autonomen landwirtschaftlichen Arbeitsmaschine hinterlegte Kennfelddaten der autonomen landwirtschaftlichen Arbeitsmaschine, wobei die Verarbeitungseinrichtung mit der Speichereinheit der Steuereinrichtung Übertragung von Daten kommuniziert.

Ergänzend oder alternativ hierzu umfassen die Referenzdaten Geometriedaten des Arbeitsaggregats der autonomen landwirtschaftlichen Arbeitsmaschine und/oder des an die autonome landwirtschaftliche Arbeitsmaschine adaptierten Arbeitsaggregats, Lastkollektive des Arbeitsaggregats der autonomen landwirtschaftlichen Arbeitsmaschine und/oder des an die autonome landwirtschaftliche Arbeitsmaschine adaptierten Arbeitsaggregats, Geodaten, insbesondere Daten zur Lokalisierung der autonomen landwirtschaftlichen Arbeitsmaschine während der Durchführung des Arbeitsschrittes, Wetterdaten und/oder agronomische Daten, insbesondere Bodendaten, Bestandsdaten, Ertragsdaten und/oder Flächendaten, die in der Datenbank und/oder in einer von der Datenbank unabhängigen Referenzdatenbank hinterlegt sind, wobei die Verarbeitungseinrichtung mit der Referenzdatenbank zur Übertragung von Daten kommuniziert.

Die Verwendung von Referenzdaten als weitere Eingangsgröße in der Analyseroutine sorgt für eine erhebliche Steigerung der Genauigkeit bei der Bestimmung des Verschleißzustands des Arbeitsaggregats.

Gemäß einer vorteilhaften Weiterbildung der Erfindung ist vorgesehen, dass, mittels der Verarbeitungseinrichtung, zeitgleich der Verschleißzustand einer Vielzahl an Arbeitsaggregaten der autonomen landwirtschaftlichen Arbeitsmaschine und/oder einer Vielzahl an an die autonome landwirtschaftliche Arbeitsmaschine adaptierter Arbeitsaggregate bestimmt wird und die Anweisung zur Durchführung des Arbeitsschrittes durch die autonome landwirtschaftliche Arbeitsmaschine in Abhängigkeit der Vielzahl an bestimmten Verschleißzuständen erzeugt wird.

Demnach kann das erfindungsgemäße Verfahren nicht nur dazu verwendet werden, den Verschleißzustand genau eines Arbeitsaggregats zuverlässig zu bestimmen. Vielmehr können zeitgleich Daten zu einer Vielzahl an Arbeitsaggregaten der autonomen landwirtschaftlichen Arbeitsmaschine und/oder einer Vielzahl an an die autonome landwirtschaftliche Arbeitsmaschine adaptierter Arbeitsaggregate von der Sensoreinrichtung ermittelt werden, anhand derer anschließend mittels der Verarbeitungseinrichtung ein Verschleißzustand jedes dieser Arbeitsaggregate zu dem entsprechenden Zeitpunkt, an dem die Daten ermittelt wurden, bestimmt werden. So kann sichergestellt werden, dass ein kritischer Verschleißzustand eines spezifischen Arbeitsaggregats einer Vielzahl an vorhandenen Arbeitsaggregaten, der zu einer betriebskritischen Situation führen könnte bzw. würde, erkannt wird, der bei einer Überwachung nur eines Arbeitsaggregats unter Umständen nicht festgestellt worden wäre.

Gemäß einer vorteilhaften Weiterbildung der Erfindung ist vorgesehen, dass die Datenbank als zentrale Datenbank oder als dezentrale Datenbank, vorzugsweise als Blockchain-Datenbank, ausgebildet ist.

Weiter vorzugsweise ist vorgesehen, dass die Datenbank eine cloudbasierte Datenbank ist.

Gemäß einer vorteilhaften Weiterbildung der Erfindung ist vorgesehen, dass die Datenbank und die Verarbeitungseinrichtung gemeinsam ein Verwaltungssystem ausbilden.

Vorzugsweise ist das Verwaltungssystem einer ersten Entität zugeordnet, die unabhängig von zumindest einer zweiten Entität ist, der die autonome landwirtschaftliche Arbeitsmaschine, das an die autonome landwirtschaftliche Arbeitsmaschine adaptierte Arbeitsaggregat und/oder eine landwirtschaftliche Fläche oder Hofstätte, auf der die autonome landwirtschaftliche Arbeitsmaschine den Arbeitsschritt durchführt, zugeordnet ist, wobei eine Nutzung des Verwaltungssystems zur Durchführung der Verfahrensschritte von der ersten Entität bei einer vorliegenden Berechtigung freigeschaltet wird.

Wahlweise kann das Verwaltungssystem demnach der Person, beispielsweise dem Landwirt oder dem Lohnunternehmer, der die autonome landwirtschaftliche Arbeitsmaschine, das hieran adaptierte Arbeitsaggregat und/oder die landwirtschaftliche Fläche oder Hofstätte, auf der der Arbeitsschritt durchgeführt werden soll, wird oder wurde, oder einem Dienstleister (erste Entität) zugeordnet sein. Die Person (zweite Entität), beispielsweise der Landwirt oder Lohnunternehmer, kann sich die Nutzung des Verwaltungssystems zur Durchführung des erfindungsgemäßen Verfahrens durch die Bezahlung einer Gebühr von dem Dienstleister freischalten lassen. Die Durchführung der Verfahrensschritte betreffend das Bestimmen des Verschleißzustands sowie das Erzeugen der Anweisung wird demnach als kostenpflichtige Dienstleistung angeboten (d.h., als eine As-a-Service-Funktionalität).

Die vorliegende Erfindung wird nachstehend anhand eines in der Figur dargestellten Ausführungsbeispiels näher erläutert.

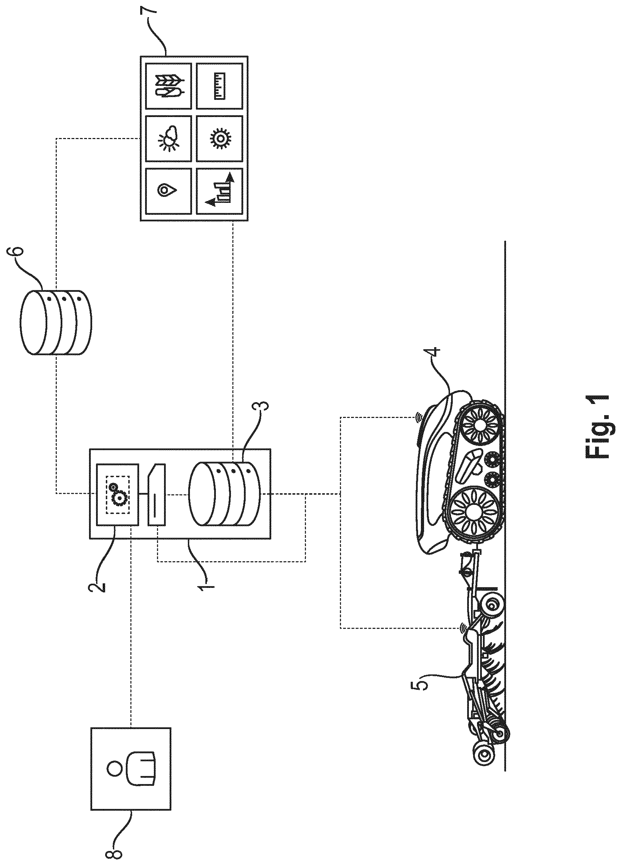

FIG. 1 zeigt ein datenbankbasiertes Verwaltungssystem 1, dass von eine Verarbeitungseinrichtung 2 und eine mit dieser zur Übertragung von Daten verbundene Datenbank 3 umfasst. Die Datenbank 3 kann als zentrale Datenbank 3 oder aber als dezentrale, also verteilte, Datenbank 3 ausgebildet sein. Ist die Datenbank 3 als dezentrale Datenbank 3 ausgebildet, kann sie insbesondere auch als Blockchain-Datenbank 3 ausgebildet sein. Auch ist es möglich, dass die Datenbank 3 als cloudbasierte Datenbank 3 implementiert ist. Sowohl die Verarbeitungseinrichtung 2 als auch die Datenbank 3 sind mit einer autonomen landwirtschaftlichen Arbeitsmaschine 4 und gegebenenfalls mit einem an die autonome landwirtschaftliche Arbeitsmaschine 4 adaptierten Arbeitsaggregat 5 zur Übertragung von Daten verbunden. Insbesondere ist die Verarbeitungseinrichtung 2 mit einer - in FIG. 1 nicht dargestellten - Steuereinrichtung der autonomen landwirtschaftlichen Arbeitsmaschine 4 und die Datenbank 3 mit einer - in FIG. 1 nicht dargestellten - Sensoreinrichtung, die Daten ermitteln kann, die Betriebsparameter der autonomen landwirtschaftlichen Arbeitsmaschine 4, insbesondere Daten zu Arbeitsaggregaten der autonomen landwirtschaftlichen Arbeitsmaschine 4, wie Antriebsmotoren, Getriebe oder dergleichen, und/oder Betriebsparameter des an die autonome landwirtschaftliche Arbeitsmaschine 4 adaptierten Arbeitsaggregats 5, wie ein Anbaugerät, beispielsweise ein Grubber, ein Pflug, eine Egge, ein Mähwerk oder dergleichen, oder ein Vorsatzgerät, beispielsweise ein Schneidwerk, repräsentiert, zur Übertragung von Daten verbunden. Das datenbankbasierte Verwaltungssystem 1, das die Verarbeitungseinrichtung 2 und die Datenbank 3 umfasst, bilden demnach ein externes Verwaltungssystem 1, das sich nicht in der autonomen landwirtschaftlichen Arbeitsmaschine 4 und/oder einem an die autonome landwirtschaftliche Arbeitsmaschine 4 adaptierten Arbeitsaggregat 5 befindet. Die Verarbeitungseinrichtung 2 kann weiterhin mit einer sogenannten Referenzdatenbank 6 zur Übertragung von Daten verbunden sein, in der sogenannte Referenzdaten 7 hinterlegt sein können, auf die die Verarbeitungseinrichtung 2 zugreifen kann. Die Kommunikation der verschiedenen Einrichtungen, Einheiten, Maschinen und Aggregate 1, 2, 3, 4, 5, 6 miteinander zur Übertragung von Daten kann wahlweise kabelgebunden und/oder drahtlos erfolgen.

Bezugnehmend auf die zuvor beschriebenen Einrichtungen, Einheiten, Maschinen und Aggregate 1, 2, 3, 4, 5, 6 sowie Referenzdaten 7 wird nachfolgend das erfindungsgemäße Verfahren zum Bestimmen eines Verschleißzustands eines Arbeitsaggregats der autonomen landwirtschaftlichen Arbeitsmaschine 4 und/oder eines an die autonome landwirtschaftliche Arbeitsmaschine 4 adaptierten Arbeitsaggregats 5 im Detail beschrieben.

Wie bereits eingangs angedeutet ist für die Steuerung einer autonomen landwirtschaftlichen Arbeitsmaschine 4 kein Bediener vorgesehen, der Kenntnisse über einen auszuführenden landwirtschaftlichen Arbeitsablauf mit einer Abfolge an Arbeitsschritten hat, der kritische Verschleißzustände von Arbeitsaggregaten, die zu einer betriebskritischen Situation führen könnten, optisch, haptisch und/oder akustisch wahrnehmen kann und basierend auf diesen von ihm selbsttätig ermittelten Verschleißzuständen oder basierend auf ihm angezeigten kritischen Verschleißzuständen eine Ansteuerung der Arbeitsmaschine vornehmen kann. Demnach ist es notwendig einen automatisch ablaufenden Prozess zu implementieren, der die zuverlässige Bestimmung von Verschleißzuständen von Arbeitsaggregaten im Kontext der Nutzung von autonomen landwirtschaftlichen Arbeitsmaschinen r zur Durchführung von Arbeitsschritten und basierend hierauf eine Ansteuerung der autonomen landwirtschaftlichen Arbeitsmaschine r erlaubt.

Erfindungsgemäß ist nun vorgesehen, dass zunächst mittels der Sensoreinrichtung zu einer Vielzahl an Zeitpunkten t_{1,...,n} vor, während und/oder nach der Durchführung eines Arbeitsschrittes durch die autonome landwirtschaftliche Arbeitsmaschine 4, beispielsweise auf eine landwirtschaftlichen Fläche oder einer Hofstätte, Daten ermittelt werden, die Betriebsparameter der autonomen landwirtschaftlichen Arbeitsmaschine 4 und/oder Betriebsparameter des an die autonome landwirtschaftliche Arbeitsmaschine 4 adaptierten Arbeitsaggregats 5 repräsentieren. Die Sensoreinrichtung kann zum Ermitteln der Daten eine Vielzahl an - in FIG. 1 nicht dargestellten - Sensoren umfassen, die wahlweise an der autonomen landwirtschaftlichen Arbeitsmaschine 4 und/oder an dem an die autonome landwirtschaftliche Arbeitsmaschine 4 adaptierten Arbeitsaggregat 5 angeordnet sind.

Diese Daten werden von der Sensoreinrichtung an die Datenbank 3 übermittelt, wobei eine Übermittlung zu jedem Zeitpunkt t der Vielzahl an Zeitpunkten t_{1,...,n}, an dem die Daten von der Sensoreinrichtung ermittelt wurden, vorgenommen wird. Die ermittelten Daten werden nach ihrer Übermittlung an die Datenbank 3 in dieser hinterlegt. Zum Bestimmen des Verschleißzustands des Arbeitsaggregats der autonomen landwirtschaftlichen Arbeitsmaschine 4 und oder des an die autonome landwirtschaftliche Arbeitsmaschine 4 adaptierten Arbeitsaggregats 5, zu dem von der Sensoreinrichtung ermittelte Daten vorliegen, greift die Verarbeitungseinrichtung 2 auf diese Daten, die in der Datenbank 3 hinterlegt sind, zu. Demnach wird zu jedem Zeitpunkt t der Vielzahl an Zeitpunkten t_{1,...,n}, an denen die Daten von der Sensoreinrichtung ermittelt wurden, durch die Verarbeitungseinrichtung 2 eine Bestimmung des Verschleißzustands des entsprechenden Arbeitsaggregats zu diesem Zeitpunkt t vorgenommen.

Das Bestimmen des Verschleißzustands durch die Verarbeitungseinrichtung 2 erfolgt durch ein Verarbeiten der ermittelten Daten in einer Analyseroutine. Die Analyseroutine wendet zum Bestimmen des Verschleißzustands des Arbeitsaggregats einen Analysealgorithmus an, mittels dem die von der Sensoreinrichtung ermittelten Daten derart verarbeitet werden, dass der Verschleißzustand des Arbeitsaggregats ausgegeben wird. Beispielsweise kann ein Wert zwischen 0 % und 100 % als Ergebnis der Bestimmung in der Analyseroutine ausgegeben werden, wobei 0 % keinen Verschleiß des Arbeitsaggregats und 100 % das Erreichen der maximalen Lebensdauer des Arbeitsaggregats definiert und ein kritischer Verschleißzustand, der zu einem betriebskritischen Zustand der autonomen landwirtschaftlichen Arbeitsmaschine 4 führen könnte, beispielsweise ab einem Wert größer 60 % Verschleiß vorliegt. Vorzugsweise werden neben den von der Sensoreinrichtung ermittelten Daten die zuvor erwähnten Referenzdaten 7 als Eingangsgröße des Analysealgorithmus verwendet. Als Referenzdaten 7 können die in einer Speichereinheit der Steuereinrichtung der autonomen landwirtschaftlichen Arbeitsmaschine 4 hinterlegte Kennfelddaten der autonomen landwirtschaftlichen Arbeitsmaschine 4, Geometriedaten des Arbeitsaggregats der autonomen landwirtschaftlichen Arbeitsmaschine 4 und/oder des an die autonome landwirtschaftliche Arbeitsmaschine 4 adaptierten Arbeitsaggregats 5, Lastkollektive des Arbeitsaggregats der autonomen landwirtschaftlichen Arbeitsmaschine 4 und/oder des an die autonome landwirtschaftliche Arbeitsmaschine 4 adaptierten Arbeitsaggregats 5, Geodaten, insbesondere Daten zur Lokalisierung der autonomen landwirtschaftlichen Arbeitsmaschine 4 während der Durchführung des Arbeitsschrittes, Wetterdaten und/oder agronomische Daten, insbesondere Bodendaten, Bestandsdaten, Ertragsdaten und/oder Flächendaten, dienen.

Vorzugsweise ist der in der Analyseroutine durch die Verarbeitungseinrichtung 2 verwendete Analysealgorithmus ein lernfähiger Analysealgorithmus, also ein Analysealgorithmus, der auf einer künstlichen Intelligenz, vorzugsweise einem künstlichen neuronalen Netz, basiert. Der lernfähige Analysealgorithmus wird vor der Durchführung einer ersten Bestimmung eines Verschleißzustands mittels eines Initialdatensatzes, der mittels manueller Annotation vorgenommene Zuordnungen von Daten betreffend verschiedene Betriebsparameter von Arbeitsaggregaten von autonomen landwirtschaftlichen Arbeitsmaschinen 4 und/oder von an autonome landwirtschaftliche Arbeitsmaschinen 4 adaptierten Arbeitsaggregaten 5 und entsprechenden Verschleißzuständen der Arbeitsaggregate definiert, trainiert. Die während der Durchführung des erfindungsgemäßen Verfahrens ermittelten Daten und bestimmten Verschleißzustände können zum weiteren Trainieren des Analysealgorithmus verwendet werden.

Sobald der Verschleißzustand des Arbeitsaggregats durch die Verarbeitungseinrichtung 2 in der Analyseroutine bestimmt worden ist, wird von der Verarbeitungseinrichtung 2 eine Anweisung zur Durchführung des Arbeitsschrittes durch die autonome landwirtschaftliche Arbeitsmaschine 4 erzeugt. Eine Anweisung zeichnet sich dadurch aus, dass diese mindestens eine Vorschrift umfasst. Die Anweisung wird von der Steuereinrichtung der autonomen landwirtschaftlichen Arbeitsmaschine 4 nach Übermittlung der Anweisung durch die Verarbeitungseinrichtung 2 an die Steuereinrichtung der autonomen landwirtschaftlichen Arbeitsmaschine 4 ausgeführt, wodurch die autonome landwirtschaftliche Arbeitsmaschine 4 entsprechend der in der Anweisung vorhandenen Vorschrift von der Steuereinrichtung angesteuert wird.

Abhängig von dem bestimmten Verschleißzustand des Arbeitsaggregats kann die Anweisung eine Vielzahl an Vorschriften umfassen. So kann die Anweisung eine Vorschrift umfassen, die eine Ansteuerung der autonomen landwirtschaftlichen Arbeitsmaschine 4 zur planmäßigen Durchführung des Arbeitsschrittes definiert. Alternativ hierzu kann die Anweisung eine Vorschrift umfassen, die eine Ansteuerung der autonomen landwirtschaftlichen Arbeitsmaschine 4 zum Stoppen der planmäßigen Durchführung des Arbeitsschrittes definiert. Umfasst die Anweisung die Vorschrift, die eine Ansteuerung der autonomen landwirtschaftlichen Arbeitsmaschine 4 zum Stoppen der planmäßigen Durchführung des Arbeitsschrittes definiert, so kann die Anweisung weiterhin eine Vorschrift, die das Beauftragen einer für eine Wartung der autonomen landwirtschaftlichen Arbeitsmaschine 4 zuständigen Person 8 zur Wartung des Arbeitsaggregats der autonomen landwirtschaftlichen Arbeitsmaschine 4 und/oder des an die autonome landwirtschaftliche Arbeitsmaschine 4 adaptierten Arbeitsaggregats 5 definiert, oder eine Vorschrift, die eine geänderte Route für die autonome landwirtschaftliche Arbeitsmaschine 4 zur Anfahrt eines Ortes definiert, an dem die für die Wartung der autonomen landwirtschaftlichen Arbeitsmaschine 4 zuständige Person 8 die Wartung des Arbeitsaggregats der autonomen landwirtschaftlichen Arbeitsmaschine 4 und/oder des an die autonome landwirtschaftliche Arbeitsmaschine 4 adaptierten Arbeitsaggregats 5 durchführt, umfassen.

Wird beispielsweise der Verschleißzustand des Arbeitsaggregats unmittelbar vor einem Beginn der Durchführung des Arbeitsschrittes ermittelt und wird ein unkritischer Verschleißzustand durch die Verarbeitungseinrichtung 2 bestimmt, so wird die Anweisung mit der Vorschrift, die eine Ansteuerung der autonomen landwirtschaftlichen Arbeitsmaschine 4 zur planmäßigen Durchführung des Arbeitsschrittes definiert, erzeugt, dessen Ausführung durch die Steuereinrichtung dazu führt, dass die autonome landwirtschaftliche Arbeitsmaschine 4 von der Steuereinrichtung derart angesteuert wird, dass sie mit der Durchführung des Arbeitsschrittes wie geplant beginnt.

Wird der Verschleißzustand des Arbeitsaggregats unmittelbar vor einem Beginn der Durchführung des Arbeitsschrittes ermittelt und wird hingegen ein kritischer Verschleißzustand durch die Verarbeitungseinrichtung 2 bestimmt, so wird die Anweisung mit der Vorschrift, die eine Ansteuerung der autonomen landwirtschaftlichen Arbeitsmaschine 4 zum Stoppen der planmäßigen Durchführung des Arbeitsschrittes definiert, erzeugt, dessen Ausführung durch Steuereinheit dazu führt, dass die autonome landwirtschaftliche Arbeitsmaschine 4 von der Steuereinrichtung derart angesteuert wird, dass sie nicht mit der Durchführung des Arbeitsschrittes wie geplant beginnt.

Wird der Verschleißzustand des Arbeitsaggregats während der Durchführung des Arbeitsschrittes ermittelt und wird ein unkritischer Verschleißzustand durch die Verarbeitungseinrichtung 2 bestimmt, so wird die Anweisung mit der Vorschrift, die eine Ansteuerung der autonomen landwirtschaftlichen Arbeitsmaschine 4 zur planmäßigen Durchführung des Arbeitsschrittes definiert, erzeugt, dessen Ausführung durch die Steuereinrichtung dazu führt, dass die autonome landwirtschaftliche Arbeitsmaschine 4 von der Steuereinrichtung derart angesteuert wird, dass sie die Durchführung des Arbeitsschrittes planmäßig weiter ausführt.

Wird der Verschleißzustand des Arbeitsaggregats während der Durchführung des Arbeitsschrittes ermittelt und wird hingegen ein kritischer Verschleißzustand durch die Verarbeitungseinrichtung 2 bestimmt, so wird die Anweisung mit der Vorschrift, die eine Ansteuerung der autonomen landwirtschaftlichen Arbeitsmaschine 4 zum Stoppen der planmäßigen Durchführung des Arbeitsschrittes definiert, erzeugt, dessen Ausführung durch die Steuereinrichtung dazu führt, dass die autonome landwirtschaftliche Arbeitsmaschine 4 von der Steuereinrichtung derart angesteuert wird, dass sie die Durchführung des Arbeitsschrittes stoppt bzw. unterbricht.

Wird der Verschleißzustand des Arbeitsaggregats nach der Durchführung des Arbeitsschrittes ermittelt und wird ein unkritischer Verschleißzustand durch die Verarbeitungseinrichtung 2 bestimmt, so wird die Anweisung mit der Vorschrift, die eine Ansteuerung der autonomen landwirtschaftlichen Arbeitsmaschine 4 zur planmäßigen Durchführung des Arbeitsschrittes definiert, erzeugt, dessen Ausführung durch die Steuereinrichtung dazu führt, dass die autonome landwirtschaftliche Arbeitsmaschine 4 von der Steuereinrichtung derart angesteuert wird, dass die Durchführung eines auf den durchgeführten Arbeitsschritt folgenden Arbeitsschrittes planmäßig erfolgt.

Wird der Verschleißzustand des Arbeitsaggregats beispielsweise nach der Durchführung des Arbeitsschrittes ermittelt und wird hingegen ein kritischer Verschleißzustand durch die Verarbeitungseinrichtung 2 bestimmt, so wird die Anweisung mit der Vorschrift, die eine Ansteuerung der autonomen landwirtschaftlichen Arbeitsmaschine 4 zum Stoppen der planmäßigen Durchführung des Arbeitsschrittes definiert, erzeugt, dessen Ausführung durch die Steuereinrichtung dazu führt, dass die autonome landwirtschaftliche Arbeitsmaschine 4 von der Steuereinrichtung derart angesteuert wird, dass sie mit der Durchführung eines auf den durchgeführten Arbeitsschritt folgenden Arbeitsschrittes nicht beginnt.

Wird ein kritischer Verschleißzustand des Arbeitsaggregats vor, während und/oder nach der Durchführung eines Arbeitsschrittes von der Verarbeitungseinrichtung 2 bestimmt, der eine Wartung des Arbeitsaggregats erfordert, so kann die Anweisung eine weitere Vorschrift umfassen, die dazu führt, dass das Arbeitsaggregat entweder vor Ort durch die für die Wartung der autonomen landwirtschaftlichen Arbeitsmaschine 4 zuständige Person 8 gewartet wird oder aber das Arbeitsaggregat an einem entfernten Ort durch die hierfür zuständige Person 8 gewartet wird, an den sich die autonome landwirtschaftliche Arbeitsmaschine 4 selbststätig, also autonom, bewegt hat.

Anhand der durch die Verarbeitungseinrichtung 2 durchgeführten Bestimmung von Verschleißzuständen des Arbeitsaggregats zu einer Vielzahl an Zeitpunkten t_{1,...,n} kann eine Verschleißkennzahl von der Verarbeitungseinrichtung 2 ermittelt werden. Hierzu wird der zu einem Zeitpunkt t₁ unmittelbar vor der Durchführung des Arbeitsschrittes durch die autonome landwirtschaftliche Arbeitsmaschine 4 durch die Verarbeitungseinrichtung 2 bestimmte Verschleißzustand des Arbeitsaggregats mit einem zu einem Zeitpunkt tₙ unmittelbar nach der Durchführung des Arbeitsschrittes durch die autonome landwirtschaftliche Arbeitsmaschine 4 von der Verarbeitungseinrichtung 2 bestimmten Verschleißzustand des Arbeitsaggregats verglichen und basierend auf diesem Vergleich die Verschleißkennzahl für das Arbeitsaggregat von der Verarbeitungseinrichtung 2 bestimmt. Die Verschleißkennzahl repräsentiert den Verschleiß des Arbeitsaggregats, der bei der Durchführung des Arbeitsschrittes durch die autonome landwirtschaftliche Arbeitsmaschine 4 entsteht bzw. entstanden ist. Die mittels der Verarbeitungseinrichtung 2 ermittelte Verschleißkennzahl wird in der Datenbank 3 hinterlegt.

Die von der Verarbeitungseinrichtung 2 ermittelte Verschleißkennzahl für das Arbeitsaggregat kann dazu herangezogen bzw. verarbeitet werden, Betriebskosten zu bestimmen, die bei der Durchführung des Arbeitsschrittes durch die autonome landwirtschaftliche Arbeitsmaschine 4 entstehen bzw. entstanden sind. So kann beispielsweise anhand der Verschleißkennzahl ermittelt werden, welche Kosten bei der Durchführung des Arbeitsschrittes durch die autonome landwirtschaftlich Arbeitsmaschine 4 entstanden sind. Diese Kosten können bei der Planung von nachfolgenden Arbeitsschritten oder Arbeitsabläufen berücksichtigt werden. Beispielsweise kann anhand der ermittelten Betriebskosten, die auf der Verschleißkennzahl basieren, eine Änderung in der Bewirtschaftungsstrategie einer landwirtschaftlichen Fläche vorgenommen werden.

Ergänzend oder alternativ hierzu kann die von der Verarbeitungseinrichtung 2 ermittelte Verschleißkennzahl für das Arbeitsaggregat an die für die Wartung der autonomen landwirtschaftlichen Arbeitsmaschine 4 bzw. des Arbeitsaggregats der autonomen landwirtschaftlichen Arbeitsmaschine 4 und/oder des an die autonome landwirtschaftliche Arbeitsmaschine 4 adaptierbaren Arbeitsaggregats 5 zuständige Person 8 übermittelt werden, so dass diese die Verschleißkennzahl zur Planung von Wartungsintervallen der autonomen landwirtschaftlichen Arbeitsmaschine 4 bzw. des Arbeitsaggregats der autonomen landwirtschaftlichen Arbeitsmaschine 4 und/oder des an die autonome landwirtschaftliche Arbeitsmaschine 4 adaptierbaren Arbeitsaggregats 5 nutzen kann.

Mittels der Verarbeitungseinrichtung 2 kann zeitgleich der Verschleißzustand einer Vielzahl an Arbeitsaggregaten der autonomen landwirtschaftlichen Arbeitsmaschine 4 und/oder einer Vielzahl an an die autonome landwirtschaftliche Arbeitsmaschine 4 adaptierter Arbeitsaggregate 5 bestimmt werden. Die Anweisung zur Durchführung des Arbeitsschrittes durch die autonome landwirtschaftliche Arbeitsmaschine 4 wird dann in Abhängigkeit der Vielzahl an bestimmten Verschleißzuständen erzeugt.

Das erfindungsgemäße Verfahren kann demnach nicht nur dazu verwendet werden, den Verschleißzustand genau eines Arbeitsaggregats zuverlässig zu bestimmen. Vielmehr können zeitgleich Daten zu einer Vielzahl an Arbeitsaggregaten der autonomen landwirtschaftlichen Arbeitsmaschine 4 und/oder einer Vielzahl an an die autonome landwirtschaftliche Arbeitsmaschine 4 adaptierter Arbeitsaggregate 5 von der Sensoreinrichtung ermittelt werden, anhand derer anschließend mittels der Verarbeitungseinrichtung 2 ein Verschleißzustand jeder dieser Arbeitsaggregate zu dem entsprechenden Zeitpunkt t, an dem die Daten ermittelt wurden, bestimmt wird. So kann sichergestellt werden, dass ein kritischer Verschleißzustand eines spezifischen Arbeitsaggregats einer Vielzahl an vorhandenen Arbeitsaggregaten, der zu einer betriebskritischen Situation aufgrund eines verschleißbedingten Defekts des spezifischen Arbeitsaggregats führen könnte, erkannt wird, der bei einer Überwachung nur eines Arbeitsaggregats unter Umständen nicht festgestellt worden wäre.

Das die Verarbeitungseinrichtung 2 und die Datenbank 3 umfassende Verwaltungssystem 1 kann einer ersten Entität, beispielsweise einem Dienstleister, zugeordnet sein, die unabhängig von einer zweiten Entität, einer Person, beispielsweise einem Landwirt oder einem Lohnunternehmer (kann auch die mit der Wartung beauftrage Person 8 sein), dem die autonome landwirtschaftliche Arbeitsmaschine 4, das hieran adaptierte Arbeitsaggregat 5 und/oder die landwirtschaftliche Fläche oder Hofstätte, auf der der Arbeitsschritt durchgeführt werden soll, wird oder wurde, zugeordnet ist. Eine Nutzung des Verwaltungssystems 1 zur Durchführung der Verfahrensschritte, die mittels der Datenbank 3 und der Verarbeitungseinrichtung 2 durchgeführt werden, kann dabei von der ersten Entität, also dem Dienstleister, bei einer vorliegenden Berechtigung freigeschaltet werden. Insbesondere kann sich die Person die Nutzung des Verwaltungssystems 1 zur Durchführung des erfindungsgemäßen Verfahrens durch die Bezahlung einer Gebühr von dem Dienstleister freischalten lassen. Die Durchführung der Verfahrensschritte betreffend das Identifizieren der Unregelmäßigkeit sowie das Erzeugen und Ausführen der Vorschrift zum Überführen der autonomen landwirtschaftlichen Arbeitsmaschine aus dem sicheren Betriebszustand in den normalen Betriebszustand wird demnach als kostenpflichtige externe Dienstleistung angeboten, d.h. als eine As-a-Service-Funktionalität.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Verwaltungssystem
- 2: Verarbeitungseinrichtung
- 3: Datenbank
- 4: autonome landwirtschaftliche Arbeitsmaschine
- 5: adaptiertes Arbeitsaggregat
- 6: Referenzdatenbank
- 7: Referenzdaten
- 8: für eine Wartung zuständige Person

## Patentansprüche

1. Verfahren zum Bestimmen eines Verschleißzustands mindestens eines Arbeitsaggregats einer autonomen landwirtschaftlichen Arbeitsmaschine (4) und/oder mindestens eines an die autonome landwirtschaftliche Arbeitsmaschine (4) adaptierten Arbeitsaggregats (5), die folgenden Verfahrensschritte umfassend:
- Mittels einer Sensoreinrichtung, Ermitteln von Daten zu einer Vielzahl an Zeitpunkten (t_{1,...,n}) vor, während und/oder nach einer Durchführung eines Arbeitsschrittes durch die autonome landwirtschaftliche Arbeitsmaschine (4), wobei die Daten Betriebsparameter der autonomen landwirtschaftlichen Arbeitsmaschine (4) und/oder Betriebsparameter des an die autonome landwirtschaftliche Arbeitsmaschine (4) adaptierten Arbeitsaggregats (5) repräsentieren;
**gekennzeichnet durch die Verfahrensschritte:**
- Übermitteln der ermittelten Daten an eine Datenbank (3) und zwar zu jedem Zeitpunkt (t) der Vielzahl an Zeitpunkten (t_{1,...,n}), wobei die Datenbank (3) mit der Sensoreinrichtung zur Übertragung von Daten kommuniziert und die ermittelten Daten in der Datenbank (3) hinterlegt werden;
- Mittels einer Verarbeitungseinrichtung (2), Bestimmen des Verschleißzustands des Arbeitsaggregats der autonomen landwirtschaftlichen Arbeitsmaschine (4) und/oder des an die autonome landwirtschaftliche Arbeitsmaschine (4) adaptierten Arbeitsaggregats (5) zu jedem Zeitpunkt (t) der Vielzahl an Zeitpunkten (t_{1,...,n}) durch ein Verarbeiten der ermittelten Daten in einer Analyseroutine, wobei die Verarbeitungseinrichtung (2) mit der Datenbank (3) zur Übertragung von Daten kommuniziert;
- Mittels der Verarbeitungseinrichtung (2), Erzeugen einer Anweisung zur Durchführung des Arbeitsschrittes durch die autonome landwirtschaftliche Arbeitsmaschine (4) und zwar in Abhängigkeit des bestimmten Verschleißzustands des Arbeitsaggregats der autonomen landwirtschaftlichen Arbeitsmaschine (4) und/oder des an die autonome landwirtschaftliche Arbeitsmaschine (4) adaptierten Arbeitsaggregats (5); und
- Übermitteln der erzeugten Anweisung an eine Steuereinrichtung der autonomen landwirtschaftlichen Arbeitsmaschine (4) und Ausführen der Anweisung durch die Steuereinrichtung der autonomen landwirtschaftlichen Arbeitsmaschine (4).

2. Verfahren nach Anspruch 1, **dadurch gekennzeichnet, dass** die Anweisung zur Durchführung des Arbeitsschrittes Folgendes umfasst:
- eine Vorschrift, die eine Ansteuerung der autonomen landwirtschaftlichen Arbeitsmaschine (4) zur planmäßigen Durchführung des Arbeitsschrittes definiert.

3. Verfahren nach Anspruch 1, **dadurch gekennzeichnet, dass** die Anweisung zur Durchführung des Arbeitsschrittes Folgendes umfasst:
- eine Vorschrift, die eine Ansteuerung der autonomen landwirtschaftlichen Arbeitsmaschine (4) zum Stoppen der planmäßigen Durchführung des Arbeitsschrittes definiert.

4. Verfahren nach Anspruch 3, **dadurch gekennzeichnet, dass** die Anweisung zur Durchführung des Arbeitsschrittes Folgendes umfasst:
- eine Vorschrift, die das Beauftragen einer für eine Wartung der autonomen landwirtschaftlichen Arbeitsmaschine (4) zuständigen Person (8) zur Wartung des Arbeitsaggregats der autonomen landwirtschaftlichen Arbeitsmaschine (4) und/oder des an die autonome landwirtschaftliche Arbeitsmaschine (4) adaptierten Arbeitsaggregats (5) definiert; oder
- eine Vorschrift, die eine geänderte Route für die autonome landwirtschaftliche Arbeitsmaschine (4) zur Anfahrt eines Ortes definiert, an dem die für die Wartung der autonomen landwirtschaftlichen Arbeitsmaschine (4) zuständige Person (8) die Wartung des Arbeitsaggregats der autonomen landwirtschaftlichen Arbeitsmaschine (4) und/oder des an die autonome landwirtschaftliche Arbeitsmaschine (4) adaptierten Arbeitsaggregats (5) durchführt.

5. Verfahren nach einem der Ansprüche 1 bis 4, **dadurch gekennzeichnet, dass,** mittels der Verarbeitungseinrichtung (2), ein zu einem Zeitpunkt (t₁) unmittelbar vor der Durchführung des Arbeitsschrittes bestimmter Verschleißzustand des Arbeitsaggregats der autonomen landwirtschaftlichen Arbeitsmaschine (4) und/oder des an die autonome landwirtschaftliche Arbeitsmaschine (4) adaptierten Arbeitsaggregats (5) mit einem zu einem Zeitpunkt (tₙ) unmittelbar nach der Durchführung des Arbeitsschrittes bestimmten Verschleißzustand des Arbeitsaggregats der autonomen landwirtschaftlichen Arbeitsmaschine (4) und/oder des an die autonome landwirtschaftliche Arbeitsmaschine (4) adaptierten Arbeitsaggregats (5) verglichen wird und basierend hierauf eine Verschleißkennzahl für das Arbeitsaggregat der autonomen landwirtschaftlichen Arbeitsmaschine (4) und/oder das an die autonome landwirtschaftliche Arbeitsmaschine (4) adaptierte Arbeitsaggregat (5) ermittelt wird, die den Verschleiß des Arbeitsaggregats der autonomen landwirtschaftlichen Arbeitsmaschine (4) und/oder des an die autonome landwirtschaftliche Arbeitsmaschine (4) adaptierten Arbeitsaggregats (5), der bei der Durchführung des Arbeitsschrittes durch die autonome landwirtschaftliche Arbeitsmaschine (4) entsteht, repräsentiert, wobei die ermittelte Verschleißkennzahl in der Datenbank (3) hinterlegt wird.

6. Verfahren nach Anspruch 5, **dadurch gekennzeichnet, dass** die ermittelte Verschleißkennzahl für das Arbeitsaggregat der autonomen landwirtschaftlichen Arbeitsmaschine (4) und/oder das an die autonome landwirtschaftliche Arbeitsmaschine (4) adaptierte Arbeitsaggregat (5) zur Bestimmung von Betriebskosten, die bei der Durchführung des Arbeitsschrittes durch die autonome landwirtschaftliche Arbeitsmaschine (4) entstehen, verarbeitet wird.

7. Verfahren nach Anspruch 5 oder 6, **dadurch gekennzeichnet, dass** die ermittelte Verschleißkennzahl für das Arbeitsaggregat der autonomen landwirtschaftlichen Arbeitsmaschine (4) und/oder das an die autonome landwirtschaftliche Arbeitsmaschine (4) adaptierte Arbeitsaggregat (5) an eine für eine Wartung der autonomen landwirtschaftlichen Arbeitsmaschine zuständige Person (8) zur Planung von Wartungsintervallen des Arbeitsaggregats der autonomen landwirtschaftlichen Arbeitsmaschine (4) und/oder des an die autonome landwirtschaftliche Arbeitsmaschine (4) adaptierten Arbeitsaggregats (5) übermittelt wird.

8. Verfahren nach einem der Ansprüche 1 bis 7, **dadurch gekennzeichnet, dass** die Sensoreinrichtung eine Vielzahl an Sensoren umfasst, die an der autonomen landwirtschaftlichen Arbeitsmaschine (4) und/oder an dem an die autonome landwirtschaftliche Arbeitsmaschine (4) adaptierten Arbeitsaggregat (5) angeordnet sind.

9. Verfahren nach einem der Ansprüche 1 bis 8, **dadurch gekennzeichnet, dass** die Bestimmung des Verschleißzustands des Arbeitsaggregats der autonomen landwirtschaftlichen Arbeitsmaschine (4) und/oder des an die autonome landwirtschaftliche Arbeitsmaschine (4) adaptierten Arbeitsaggregats (5) mittels der Verarbeitungseinrichtung (2) unter Berücksichtigung von Referenzdaten (7) erfolgt.

10. Verfahren nach Anspruch 9, **dadurch gekennzeichnet, dass** die Referenzdaten (7) in einer Speichereinheit der Steuereinrichtung der autonomen landwirtschaftlichen Arbeitsmaschine (4) hinterlegte Kennfelddaten der autonomen landwirtschaftlichen Arbeitsmaschine (4) umfassen, wobei die Verarbeitungseinrichtung (2) mit der Speichereinheit der Steuereinrichtung zur Übertragung von Daten kommuniziert.

11. Verfahren nach Anspruch 9 oder 10, **dadurch gekennzeichnet, dass** die Referenzdaten (7) Geometriedaten des Arbeitsaggregats der autonomen landwirtschaftlichen Arbeitsmaschine (4) und/oder des an die autonome landwirtschaftliche Arbeitsmaschine (4) adaptierten Arbeitsaggregats (5), Lastkollektive des Arbeitsaggregats der autonomen landwirtschaftlichen Arbeitsmaschine (4) und/oder des an die autonome landwirtschaftliche Arbeitsmaschine (4) adaptierten Arbeitsaggregats (5), Geodaten, insbesondere Daten zur Lokalisierung der autonomen landwirtschaftlichen Arbeitsmaschine (4) während der Durchführung des Arbeitsschrittes, Wetterdaten und/oder agronomische Daten, insbesondere Bodendaten, Bestandsdaten, Ertragsdaten und/oder Flächendaten, umfassen, die in der Datenbank (3) und/oder in einer von der Datenbank (3) unabhängigen Referenzdatenbank (6) hinterlegt sind und die Verarbeitungseinrichtung (2) mit der Referenzdatenbank (6) zur Übertragung von Daten kommuniziert.

12. Verfahren nach einem der Ansprüche 1 bis 11, **dadurch gekennzeichnet, dass,** mittels der Verarbeitungseinrichtung (2), zeitgleich der Verschleißzustand einer Vielzahl an Arbeitsaggregaten der autonomen landwirtschaftlichen Arbeitsmaschine (4) und/oder einer Vielzahl an an die autonome landwirtschaftliche Arbeitsmaschine (4) adaptierter Arbeitsaggregate (5) bestimmt wird und die Anweisung zur Durchführung des Arbeitsschrittes durch die autonome landwirtschaftliche Arbeitsmaschine (4) in Abhängigkeit der Vielzahl an bestimmten Verschleißzuständen erzeugt wird.

13. Verfahren nach einem der Ansprüche 1 bis 12, **dadurch gekennzeichnet, dass** die Datenbank (3) als zentrale Datenbank (3) oder als dezentrale Datenbank (3), vorzugsweise als Blockchain-Datenbank (3), ausgebildet ist.

14. Verfahren nach einem der Ansprüche 1 bis 13, **dadurch gekennzeichnet, dass** die Datenbank (3) und die Verarbeitungseinrichtung (2) gemeinsam ein Verwaltungssystem (1) ausbilden.

15. Verfahren nach Anspruch 14, **dadurch gekennzeichnet, dass** das Verwaltungssystem (1) einer ersten Entität zugeordnet ist, die unabhängig von zumindest einer zweiten Entität ist, der die autonome landwirtschaftliche Arbeitsmaschine (4), das an die autonome landwirtschaftliche Arbeitsmaschine (4) adaptierte Arbeitsaggregat (5) und/oder eine landwirtschaftliche Fläche oder Hofstätte, auf der die autonome landwirtschaftliche Arbeitsmaschine (4) den Arbeitsschritt durchführt, zugeordnet ist, wobei eine Nutzung des Verwaltungssystems (1) zur Durchführung der Verfahrensschritte von der ersten Entität bei einer vorliegenden Berechtigung freigeschaltet wird.

## Claims

1. Method for determining a wear state of at least one working assembly of an autonomous agricultural work machine (4) and/or at least one working assembly (5) adapted to the autonomous agricultural work machine (4), comprising the following method steps:
- determining data at a multiplicity of times (t_{1,...,n}) by means of a sensor device, during and/or after carrying out an operating step by the autonomous agricultural work machine (4), wherein the data represent operating parameters of the autonomous agricultural work machine (4) and/or operating parameters of the working assembly (5) adapted to the autonomous agricultural work machine (4);
**characterized by** the method steps of:
- transmitting the determined data to a database (3), specifically at each time (t) of the multiplicity of times (t_{1,...,n}), wherein the database (3) communicates with the sensor device for transmitting data and the determined data are stored in the database (3);
- determining, by means of a processing device (2), the wear state of the working assembly of the autonomous agricultural work machine (4) and/or of the working assembly (5) adapted to the autonomous agricultural work machine (4) at each time (t) of the multiplicity of times (t_{1,...,n}) by processing the determined data in an analysis routine, wherein the processing device (2) communicates with the database (3) for transmitting data;
- generating, by means of the processing device (2), an instruction for carrying out the operating step by the autonomous agricultural work machine (4), specifically as a function of the determined wear state of the working assembly of the autonomous agricultural work machine (4) and/or of the working assembly (5) adapted to the autonomous agricultural work machine (4); and
- transmitting the generated instruction to a control device of the autonomous agricultural work machine (4), and carrying out the instruction by the control device of the autonomous agricultural work machine (4).

2. Method according to Claim 1, **characterized in that** the instruction for carrying out the operating step comprises:
- a specification which defines an actuation of the autonomous agricultural work machine (4) for carrying out the operating step as planned.

3. Method according to Claim 1, **characterized in that** the instruction for carrying out the operating step comprises:
- a specification which defines an actuation of the autonomous agricultural work machine (4) for stopping the operating step being carried out as planned.

4. Method according to Claim 3, **characterized in that** the instruction for carrying out the operating step comprises:
- a specification which defines ordering a person (8) responsible for maintenance of the autonomous agricultural work machine (4) to service the working assembly of the autonomous agricultural work machine (4) and/or the working assembly (5) adapted to the autonomous agricultural work machine (4); or
- a specification which defines a changed route for the autonomous agricultural work machine (4) to approach a location where the person (8) responsible for the maintenance of the autonomous agricultural work machine (4) performs the servicing of the working assembly of the autonomous agricultural work machine (4) and/or of the working assembly (5) adapted to the autonomous agricultural work machine (4).

5. Method according to one of Claims 1 to 4, **characterized in that**, by means of the processing device (2), a wear state, determined at a time (t₁) immediately prior to carrying out the operating step, of the working assembly of the autonomous agricultural work machine (4) and/or of the working assembly (5) adapted to the autonomous agricultural work machine (4) is compared with a wear state, determined at a time (tₙ) immediately after carrying out the operating step, of the working assembly of the autonomous agricultural work machine (4) and/or of the working assembly (5) adapted to the autonomous agricultural work machine (4) and, on the basis thereof, a wear indicator for the working assembly of the autonomous agricultural work machine (4) and/or the working assembly (5) adapted to the autonomous agricultural work machine (4) is determined, which represents the wear of the working assembly of the autonomous agricultural work machine (4) and/or of the working assembly (5) adapted to the autonomous agricultural work machine (4) that is created when carrying out the operating step by the autonomous agricultural work machine (4), wherein the determined wear indicator is stored in the database (3).

6. Method according to Claim 5, **characterized in that** the determined wear indicator for the working assembly of the autonomous agricultural work machine (4) and/or the working assembly (5) adapted to the autonomous agricultural work machine (4) is processed in order to determine operating costs which arise when carrying out the operating step by the autonomous agricultural work machine (4).

7. Method according to Claim 5 or 6, **characterized in that** the determined wear indicator for the working assembly of the autonomous agricultural work machine (4) and/or the working assembly (5) adapted to the autonomous agricultural work machine (4) is transmitted to a person (8) responsible for maintenance of the autonomous agricultural work machine in order to plan maintenance intervals of the working assembly of the autonomous agricultural work machine (4) and/or of the working assembly (5) adapted to the autonomous agricultural work machine (4).

8. Method according to one of Claims 1 to 7, **characterized in that** the sensor device comprises a multiplicity of sensors which are disposed on the autonomous agricultural work machine (4) and/or on the working assembly (5) adapted to the autonomous agricultural work machine (4).

9. Method according to one of Claims 1 to 8, **characterized in that** the determination of the wear state of the working assembly of the autonomous agricultural work machine (4) and/or of the working assembly (5) adapted to the autonomous agricultural work machine (4) takes place by means of the processing device (2) while taking into account reference data (7).

10. Method according to Claim 9, **characterized in that** the reference data (7) comprise performance map data of the autonomous agricultural work machine (4) stored in a memory unit of the control device of the autonomous agricultural work machine (4), wherein the processing device (2) communicates with the memory unit of the control device for transmitting data.

11. Method according to Claim 9 or 10, **characterized in that** the reference data (7) comprise geometric data of the working assembly of the autonomous agricultural work machine (4) and/or of the working assembly (5) adapted to the autonomous agricultural work machine (4), load collectives of the working assembly of the autonomous agricultural work machine (4) and/or of the working assembly (5) adapted to the autonomous agricultural work machine (4), geodata, in particular data for localizing the autonomous agricultural work machine (4) while carrying out the operating step, weather data and/or agronomic data, in particular ground data, inventory data, yield data and/or area data, which are stored in the database (3) and/or in a reference database (6) independent of the database (3), and the processing device (2) communicates with the reference database (6) for transmitting data.

12. Method according to one of Claims 1 to 11, **characterized in that**, by means of the processing device (2), simultaneously the wear state of a multiplicity of working assemblies of the autonomous agricultural work machine (4) and/or of a multiplicity of working assemblies (5) adapted to the autonomous agricultural work machine (4) is determined and the instruction for carrying out the operating step is generated by the autonomous agricultural work machine (4) as a function of the multiplicity of determined wear states.

13. Method according to one of Claims 1 to 12, **characterized in that** the database (3) is designed as a central database (3) or as a decentralized database (3), preferably as a blockchain database (3).

14. Method according to one of Claims 1 to 13, **characterized in that** the database (3) and the processing device (2) conjointly form a management system (1).

15. Method according to Claim 14, **characterized in that** the management system (1) is assigned to a first entity which is independent of at least one second entity to which is assigned the autonomous agricultural work machine (4), the working assembly (5) adapted to the autonomous agricultural work machine (4) and/or an agricultural area or farmstead on which the autonomous agricultural work machine (4) carries out the operating step, wherein use of the management system (1) for carrying out the method steps is enabled by the first entity in the presence of an existing authorization.

## Revendications

1. Procédé de détermination d'un état d'usure d'au moins un organe de travail d'une machine de travail agricole autonome (4) et/ou d'au moins un organe de travail (5) adapté à la machine de travail agricole autonome (4), comportant les étapes de procédé suivantes :
- détermination, à l'aide d'un dispositif à capteurs, de données relatives à une pluralité d'instants (t_{1,...,n}) avant, pendant et/ou après une exécution d'une étape de travail par la machine agricole autonome (4), les données représentant des paramètres de fonctionnement de la machine agricole autonome (4) et ou des paramètres de fonctionnement de l'organe de travail (5) adapté à la machine agricole autonome (4) ;
**caractérisé en ce qu'**il comporte les étapes de procédé de :
- transmission des données déterminées à une base de données (3), et cela à chaque instant (t) de la pluralité d'instants (t_{1,...,n}), la base de données (3) communiquant avec le dispositif à capteurs en vue de la transmission de données, et les données déterminées étant enregistrées dans la base de données (3),
- détermination, à l'aide d'un dispositif de traitement (2), de l'état d'usure de l'organe de travail de la machine agricole autonome (4) et/ou de l'organe de travail (5) adapté à la machine agricole autonome (4), à chaque instant (t) de la pluralité d'instants (t_{1,...,n}), par traitement des données déterminées, dans une routine d'analyse, le dispositif de traitement (2) communiquant avec la base de données (3) en vue de la transmission de données ;
- génération, à l'aide du dispositif de traitement (2), d'une instruction pour l'exécution de l'étape de travail par la machine agricole autonome (4), et cela en fonction de l'état d'usure déterminé de l'organe de travail de la machine agricole autonome (4) et/ou de l'organe de travail (5) adapté à la machine agricole autonome (4) ; et
- transmission de l'instruction générée à un dispositif de commande de la machine agricole autonome (4), et exécution de l'instruction par le dispositif de commande de la machine agricole autonome (4).

2. Procédé selon la revendication 1, **caractérisé en ce que** l'instruction pour l'exécution de l'étape de travail comprend l'élément suivant :
- une consigne qui définit une activation de la machine agricole autonome (4) en vue de l'exécution planifiée de l'étape de travail.

3. Procédé selon la revendication 1, **caractérisé en ce que** l'instruction pour l'exécution de l'étape de travail comprend l'élément suivant :
- une consigne qui définit une activation de la machine agricole autonome (4) en vue de l'arrêt de l'exécution planifiée de l'étape de travail.

4. Procédé selon la revendication 3, **caractérisé en ce que** l'instruction pour l'exécution de l'étape de travail comprend l'élément suivant :
- une consigne qui définit la mission pour une personne (8) responsable de l'entretien de la machine agricole autonome (4), aux fins de procéder à l'entretien de l'organe de travail de la machine agricole autonome (4) et/ou de l'organe de travail (5) adapté à la machine agricole autonome (4) ; ou
- une consigne qui définit un itinéraire modifié pour la machine agricole autonome (4), aux fins de se diriger vers un lieu où la personne (8) responsable de l'entretien de la machine agricole autonome (4) effectue l'entretien de l'organe de travail de la machine agricole autonome (4) et/ou de l'organe de travail (5) adapté à la machine agricole autonome (4).

5. Procédé selon une des revendications 1 à 4, **caractérisé en ce qu'**un état d'usure de l'organe de travail de la machine agricole autonome (4) et/ou de l'organe de travail (5) adapté à la machine agricole autonome (4), déterminé à un instant (t₁), immédiatement avant l'exécution de l'étape de travail, est comparé, à l'aide du dispositif de traitement (2), avec un état d'usure de l'organe de travail de la machine agricole autonome (4) et/ou de l'organe de travail (5) adapté à la machine agricole autonome (4), déterminé à un instant (tₙ), immédiatement après l'exécution de l'étape de travail, et on détermine, sur cette base, un indicateur d'usure pour l'organe de travail de la machine agricole autonome (4) et/ou de l'organe de travail (5) adapté à la machine agricole autonome (4), qui représente l'usure de l'organe de travail de la machine agricole autonome (4) et/ou de l'organe de travail (5) adapté à la machine agricole autonome (4), survenant lors de l'exécution de l'étape de travail par la machine agricole autonome (4), l'indicateur d'usure déterminé étant enregistré dans la base de données (3).

6. Procédé selon la revendication 5, **caractérisé en ce que** l'indicateur d'usure déterminé pour l'organe de travail de la machine agricole autonome (4) et/ou l'organe de travail (5) adapté à la machine agricole autonome (4) est traité aux fins de déterminer des coûts d'exploitation qui sont engendrés lors de l'exécution de l'étape de travail par la machine agricole autonome (4).

7. Procédé selon la revendication 5 ou 6, **caractérisé en ce que** l'indicateur d'usure déterminé pour l'organe de travail de la machine agricole autonome (4) et/ou l'organe de travail (5) adapté à la machine agricole autonome (4) est transmis à une personne (8) responsable d'un entretien de la machine agricole autonome, en vue de la planification d'intervalles d'entretien de l'organe de travail de la machine agricole autonome (4) et/ou de l'organe de travail (5) adapté à la machine agricole autonome (4).

8. Procédé selon une des revendications 1 à 7, **caractérisé en ce que** le dispositif à capteurs comporte une pluralité de capteurs qui sont disposés sur la machine agricole autonome (4) et/ou sur l'organe de travail (5) adapté à la machine agricole autonome (4).

9. Procédé selon une des revendications 1 à 8, **caractérisé en ce que** la détermination de l'état d'usure de l'organe de travail de la machine agricole autonome (4) et/ou de l'organe de travail (5) adapté à la machine agricole autonome (4) s'effectue à l'aide du dispositif de traitement (2), avec prise en compte de données de référence (7).

10. Procédé selon la revendication 9, **caractérisé en ce que** les données de référence (7) incluent des données de diagrammes caractéristiques de la machine agricole autonome (4) qui sont enregistrées dans une unité de mémoire du dispositif de commande de la machine agricole autonome (4), le dispositif de traitement (2) communiquant avec l'unité de mémoire du dispositif de commande en vue de la transmission de données.

11. Procédé selon la revendication 9 ou 10, **caractérisé en ce que** les données de référence (7) incluent des données géométriques de l'organe de travail de la machine agricole autonome (4) et/ou de l'organe de travail (5) adapté à la machine agricole autonome (4), des collectifs de charge de l'organe de travail de la machine agricole autonome (4) et/ou de l'organe de travail (5) adapté à la machine agricole autonome (4), des données géographiques, notamment des données pour la localisation de la machine agricole autonome (4) pendant l'exécution de l'étape de travail, des données météorologiques et/ou des données agronomiques, notamment des données relatives au sol, des données relatives aux cultures, des données de rendement et/ou des données relatives à la surface, qui sont enregistrées dans la base de données (3) et/ou dans une base de données de référence (6) indépendante de la base de données (3), et que le dispositif de traitement (2) communique avec la base de données de référence (6) en vue de la transmission de données.

12. Procédé selon une des revendications 1 à 11, **caractérisé en ce que** l'état d'usure d'une pluralité d'organes de travail de la machine agricole autonome (4) et/ou d'une pluralité d'organes de travail adaptés à la machine agricole autonome (4) est déterminé simultanément à l'aide du dispositif de traitement (2), et l'instruction pour l'exécution de l'étape de travail par la machine agricole autonome (4) est générée en fonction de la pluralité d'états d'usure déterminés.

13. Procédé selon une des revendications 1 à 12, **caractérisé en ce que** la base de données (3) est réalisée sous forme de base de données centralisée (3) ou de base de données décentralisée (3), de préférence sous forme de base de données blockchain (3).

14. Procédé selon une des revendications 1 à 13, **caractérisé en ce que** la base de données (3) et le dispositif de traitement (2) forment ensemble un système de gestion (1).

15. Procédé selon la revendication 14, **caractérisé en ce que** le système de gestion (1) est associé à une première entité qui est indépendante d'au moins une deuxième entité à laquelle sont associés la machine agricole autonome (4), l'organe de travail (5) adapté à la machine agricole autonome (4) et/ou une surface ou un lieu de ferme agricole où la machine agricole autonome (4) exécute l'étape de travail, une utilisation du système de gestion (1) pour la mise en œuvre des étapes de travail étant validée par la première entité, en présence d'une autorisation.
